# EUROPÄISCHE PATENTSCHRIFT

(11) **EP 2 142 893 B1**
(45) Veröffentlichungstag und Bekanntmachung des Hinweises auf die Patenterteilung: **26.12.2012**
(21) Anmeldenummer: 07724508.2
(22) Anmeldetag: 24.04.2007
(51) Int. Cl.: G01G 13/02

(54) **WÄGEVORRICHTUNG ZUR VERWENDUNG IN ABFÜLL- UND/ODER DOSIERPROZESSEN IN INDUSTRIEANLAGEN FÜR SCHÜTTGÜTER UND VERFAHREN ZUM BEFÜLLEN EINES WIEGEBEHÄLTERS BEI EINER DERARTIGEN WÄGEVORRICHTUNG**
WEIGHING DEVICE FOR USE IN FILLING AND/OR METERING PROCESSES IN INDUSTRIAL SYSTEMS FOR BULK GOODS, AND METHOD FOR FILLING A WEIGHING CONTAINER USING SUCH A WEIGHING DEVICE
DISPOSITIF DE PESÉE À EMPLOYER DANS DES PROCESSUS DE REMPLISSAGE ET/OU DE DOSAGE DANS DES INSTALLATIONS INDUSTRIELLES POUR DES MATIÈRES EN VRAC ET PROCÉDÉ POUR REMPLIR UN CONTENEUR À PESÉE AVEC UN DISPOSITIF DE PESÉE DE CE TYPE

(43) Veröffentlichungstag der Anmeldung: 13.01.2010
(73) Patentinhaber: Woywod Kunststoffmaschinen GmbH & Co. Vertriebs KG, 82166 Gräfelfing bei München (DE)
(72) Erfinder: BOLLSCHWEILER, Hans, Reinhold, MC-98000 Monaco (MC)
(74) Vertreter: Beyer, Rudi
(86) Internationale Anmeldenummer: PCT/EP2007/003578
(87) Internationale Veröffentlichungsnummer: WO 2008/128558

(56) Entgegenhaltungen:
- DE-A1- 2 032 529
- DE-A1- 4 003 993
- DE-A1- 19 619 748
- US-A- 4 134 466

## Beschreibung

Die Erfindung betrifft eine Wägevorrichtung zur Verwendung in Abfüll- und/oder Dosierprozessen in Industrieanlagen für Schüttgüter.

Des weiteren betrifft die Erfindung ein Verfahren zum Befüllen eines Wiegebehälters.

### Stand der Technik

Abfüllprozesse in Industrieanlagen bedingen bei manuellem, teilautomatischem und vollautomatischem Betrieb das Erfassen der am Prozess beteiligten Komponenten. Hierbei stehen die Möglichkeiten der volumetrischen und der gravimetrischen Messverfahren zur Verfügung. Die diskontinuierliche Wägetechnik nimmt dabei einen breiten Raum als wichtiger und wesentlicher Anlagenteil in Anspruch.

Bei der Planung von Wägeanlagen bieten sich sowohl im Bereich der Wägetechnik als auch im Bereich der Dosiertechnik in der Regel mehrere Lösungsmöglichkeiten an. Jede Gemenge-Wägeanlage wird aufgrund ganz spezifischer zu berücksichtigender Parameter konstruiert werden müssen.

Wägevorrichtungen bekannter Art bestehen im wesentlichen aus einer Wägezelle, einem Hebelwerk und einem Behälter, dem das Schüttgut, zum Beispiel Kunststoffgranulat, über einen Vorratstrichter und diesem wiederum gravimetrisch oder auch pneumatisch, zugeführt wird. Bekannt sind sogenannte Trichterwaagen, bei denen ein Trichter, mit einem von der Anwendung abhängigen Volumen, an einer Wiegezelle aufgehängt oder auch auf eine Wiegezelle aufgestellt wird. Der Trichter hat mechanisch keine andere feste Verbindung. Der untere Auslauf des Trichters ist meist kreisförmig. Er ist dem zu wiegenden Material und der Durchsatzmenge angepasst, so dass ein kontinuierlicher Materialausfluss stattfinden kann. Die Auslauföffnung ist aber immer so klein wie möglich zu halten, um die vorgenannten Bedingungen zu erfüllen. Oben ist der Trichter meist mit einem lose aufliegenden Deckel versehen. Durch einen Ausschnitt in diesen Deckel ragt ein Zuführrohr in den Trichter. Über dieses Zuführrohr wird der Trichter, kontrolliert von einer Steuerung, befüllt. Das Zuführrohr ragt in der Regel etwa zwei bis fünf Millimeter in den Trichter hinein. Oberhalb des Trichters im Zuführrohr ist ein Absperrorgan angeordnet, um den Trichter zur gewünschten Zeit mit der gefüllten Menge Material zu befüllen. Das Zuführrohr ist über dem Absperrorgan mit einem Material-Vorratsbehälter verbunden. Dieser Behälter kann ganz verschieden sein, es kann sich auch um ein Silo mit einer Speichermenge von mehreren Tonnen handeln. Wichtig ist, dass der Behälter immer mindestens die Menge Material erhält, die für eine Nachfüllung notwendig ist.

Die in der Kunststoffindustrie verwendeten Trichterwaagen haben meist Volumen zwischen fünf und 150 Litern, in Abhängigkeit vom gewünschten Durchsatz. Die Nachfüllung wird zumeist über das Gewicht gesteuert. Entweder werden der Steuerung ein Minimalgewicht (Öffnen des Nachfüllschiebers oder dergleichen) und ein Maximalgewicht (Schließen des Nachfüllschiebers oder dergleichen) vorgegeben. Es ist auch bekannt, den Füllstand über zwei Sensoren zu erfassen und die Nachführung darüber zu steuern.

Besonders bei sensitiven Komponenten, wie Farbpigmenten, kommt es darauf an, die zu bestimmende Charge möglichst genau zu wiegen. Dies bedingt neben einer entsprechenden Wägezelle auch eine möglichst genaue chargenweise Zuführung des betreffenden Schüttgutes in den Wiegebehälter. Ist der Behälter gefüllt, muss die Zufuhr des Schüttgutes abgesperrt werden. Beim Stand der Technik geschieht dies durch verschiedene Konstruktionen. Bei einer Konstruktion wird ein sogenanntes Quetschventil verwendet. Dabei handelt es sich um ein rohrförmiges Teil, das im Innenraum einen flexiblen Absperrkörper aus einem gummielastische Eigenschaften aufweisenden Kunststoff besitzt, der durch Druckluftbeaufschlagung nach innen verformt wird und dadurch den lichten Querschnitt des betreffenden Rohrstutzens verschließt und dadurch die weitere Zuführung von Schüttgut in den Wiegebehälter unterbricht. Dieses Quetschventil ist oberhalb des Wiegebehälters in einem gewissen axialen Abstand koaxial zum Wiegebehälter angeordnet. Dadurch fällt das Schüttgut mit relativ großer kinetischer Energie in den Wiegebehälter ein und versetzt diesen in Schwingungen, so dass zunächst eine gewisse Zeitdauer abgewartet werden muss, bis gewogen werden kann, was sich störend im Produktionsbetrieb auswirkt. Außerdem verbleibt nach dem Absperren des Quetschventils eine gewisse Schüttgutsäule zwischen der unteren Öffnung des Quetschventils und der oberen Mündungsöffnung des Wiegebehälters, so dass das Wiegeergebnis verfälscht werden kann.

Eine andere Konstruktion arbeitet mit einem orthogonal zur Längsachse eines Zuführrohres beweglichen Absperrschieber. Auch bei dieser Konstruktion trifft das Schüttgut mit relativ großer kinetischer Energie auf den Wiegebehälter und versetzt diesen in Schwingungen mit den zuvor geschilderten Nachteilen. Außerdem kann das Schüttgut die Führungen des Absperrschiebers blockieren, so dass dieser nicht mehr bewegt werden kann.

Des weiteren ist auch bei dieser Konstruktion nach dem Absperren eine gewisse Säule von Schüttgut zwischen dem Absperrkörper und dem Wiegebehälter vorhanden, die das Wiegeergebnis verfälscht.

Bei einer dritten Konstruktion ist ein Absperrschieber vorhanden, der eine orthogonal zur Längsachse eines Einfüllrohres gerichtete Schwenk- und eine axial zur Einfüllöffnung gerichtete Hubbewegung durchführt.

Auch bei dieser Konstruktion wird der Wiegebehälter durch die mit relativ großer Wucht in den Wiegebehälter eintretende Schüttgutmenge in Schwingungen versetzt, ganz abgesehen davon, dass auch hierbei zwischen der Einfüllöffnung des Wiegebehälters und der Unterseite des Schwenk-Hub-Absperrkörpers eine Schüttgutmenge verbleibt, die das Wiegeergebnis verfälschen kann. Außerdem bedingt diese Konstruktion zwei verschiedene Antriebsrichtungen, und zwar eine Schwenk- und eine Hubbewegung, was ebenfalls zu Störungen Anlass geben kann.

Grundsätzlich werden Trichterwaagen auf Maschinen und Geräten eingesetzt, die Materialien verarbeiten, also verbrauchen. Ist die Trichterwaage einmal gefüllt, so ist sie völlig entkoppelt und funktioniert als Waage. Wenn am unteren Auslauf Material ausfließt, so wird die Trichterwaage leichter. Über diese Gewichtsänderung kann sowohl die Leistung in Kilogramm/Stunde, als auch ein Verbrauch in Kilogramm ermittelt werden. Wenn die Trichterwaage den minimalen Füllstand erreicht hat, wird sie durch kurzzeitiges Öffnen des Absperrorgans neu befüllt. Während dieses Vorgangs werden Messwerte nicht verwendet. In dieser Zeit läuft zum Beispiel das Dosiergerät mit der vorher eingestellten Drehzahl weiter. Der Nachfüllvorgang ist sehr kurz und kann ein bis drei Kilogramm/Sekunden betragen.

Trichterwaagen werden in der Kunststoffindustrie, vorzugsweise auf allen Verarbeitungsmaschinen, zum Beispiel auf Extrudern, eingesetzt. Über die Trichterwaage kann die Durchsatzmenge des Extruders kontrolliert werden. Wenn gewünscht, kann der Extruder auch von der Steuerung der Durchsatzerfassung auf einen bestimmten vorgegebenen Durchsatz geregelt werden. Der Extruder läuft kontinuierlich.

Das zweite große Anwendungsgebiet von Trichterwaagen ist die Anordnung auf einem volumetrischen Dosiergerät. Hier kann die Trichterwaage genauso wie auf dem Extruder den Durchsatz des Dosiergerätes feststellen und das Dosiergerät auf einen bestimmten Durchsatz einregeln. Damit wird aus dem volumetrischen Gerät ein gravimetrisch geregeltes. Das Dosiergerät kann diskontinuierlich oder kontinuierlich laufen. Es ist auch ein chargenweises Abfüllen möglich.

Aus der DE 20 40 671 A1 ist eine automatische Waage mit Grob- und Feinstromzuführung zum Abwägen von körnigen oder granulierten Schüttgütern verschiedener Schüttgewichte vorbekannt, wobei in der aus Teilzeiten bestehenden Grobstromzeit der Hauptanteil der abzufüllenden Materialmenge gewichtsabhängig und nach Erhalt eines vorgegebenen Gewichtes und Umschaltung durch die Waage der Rest des Grobstromes volumenmäßig zeitabhängig in den Wiegebehälter einläuft. Nach Unter- oder Überschreitung einer fest vorgegebenen Feinstromzeit wird der zeitabhängige Grobstrombereich automatisch so verstellt, dass die Feinstromzeit eingehalten wird. Hierdurch soll erreicht werden, dass der Hauptanteil der Materialmenge während der Grobstromzeit gewichtsabhängig in das Wiegegefäß gefüllt und nach Erhalt eines vorgegebenen Gewichtes der Rest des Grobstromes über ein Zeitglied volumenmäßig zugegeben wird. Während der letztgenannten Zeit ist die Waage nicht mehr in Funktion, so dass sich der Waagebalken beruhigen kann. Zur Erzielung kurzer Füllzeiten und genauer Gewichte soll die Feinstromzeit konstant gehalten werden. Bei Änderung der Materialeigenschaften, zum Beispiel des Schüttgewichtes, wird, um die Feinstromzeit konstant zu halten, die Rest-Grobstromzeit entsprechend verkürzt oder verlängert. Das abzuwiegende Material fließt hierbei durch einen Siloauslauf in einen Wiegebehälter, der mit einer Wiegeeinrichtung verbunden ist. Das untere Ende des Siloauslaufes wird von einem Absperrkegel, der über eine Stange mit einem Hubgerät verbunden ist, verschlossen. Das Hubgerät wird von der Wiegeeinrichtung gesteuert. Nach Umschalten auf Feinstrom wird der Kegel in eine mittlere Stellung gezogen. Nach Erreichen des gewünschten Gewichtes geht der Kegel in seine oberste Lage und sperrt den Siloauslauf ab. Das abgewogene Material kann dann abgerufen und zum Beispiel einer Füllmaschine zugeführt werden. Nach Kommandogabe zieht ein Elektromagnet an und eine Klinke gibt eine Bodenklappe frei. Der Wiegebehälter hängt dabei an einem Arm eines gleicharmigen Waagebalkens. Am anderen Arm hängt ein Gewichtskasten mit Gewichtsstein. Ein im Drehpunkt gelagerter sogenannter Voreiler drückt unter den Gewichtsarm des Waagebalkens und hebt je nach Gegengewicht einen Teil des Gewichtes vom Gewichtsstein auf. Nach Wägungseinschaltung und Öffnen des Kegels setzt die Füllung des Wiegebehälters ein. Das Material fließt zunächst im Grobstrom in den Behälter und wird, da die Waage im Betrieb ist, gewichtsmäßig erfasst. Unter Mitwirkung des Voreilers wird bei Erreichen eines bestimmten Gewichts die Waage abgeschaltet und der Rest des Grobstromes über ein Zeitglied volumenmäßig zugegeben. Nach erfolgter Umschaltung legt sich der Voreiler gegen einen Anschlag und wirkt nicht mehr auf den Waagebalken ein. Während dieser Zeit bis in die Feinstromzeit hinein kann sich die Waage beruhigen. Durch Verschieben des Gewichtes kann die Kraft, mit der der Voreiler unter den Gewichtsarm des Waagebalkens drückt, verändert und somit der Umschaltpunkt den Materialeigenschaften entsprechend eingestellt werden. Nach Ablauf der eingestellten Zeit erfolgt die Umschaltung von Grob- auf Feinstrom. Zur Erreichung höherer Füllgeschwindigkeiten und genauer Gewichte wird die Feinstromzeit konstant gehalten. Bei Änderung des Schüttgewichtes ändert sich auch die Feinstromzeit, sie wird länger oder kürzer. Diese Zeitänderung wird von einem Zeitglied erfasst und danach die Grobstromzeit so verstellt, dass sich für die Feinstromzeit wieder der vorgegebene Wert ergibt.

Aus der DE 40 03 993 A1 ist eine elektrische Waage für rieselfähiges Schüttgut, insbesondere selbsttätige Waage vorbekannt, mit einer Zuführeinrichtung und einem der Zuführeinrichtung im Abstand nachgeordneten, bodenseitig zu öffnenden Waagengefäß, welches über eine Gewichtserfassungseinrichtung an einem Waagengestell aufgehängt ist, wobei die Gewichtserfassungseinrichtung einen einzelnen Kraftaufnehmer aufweist, welcher zentrisch an dem Waagengefäß angreift, wobei die Zuführeinrichtung zum Waagengefäß hin symmetrisch in Bezug auf den zentralen Angriffspunkt angeordnete Einlaufstutzen aufweist. Die Zuführeinrichtung läuft in ein Hosenrohr mit zwei Einlaufstutzen des gleichen Querschnitts aus, wobei das Waagengefäß pendelnd aufgehängt ist. Das Waagengefäß kann auch kardanisch aufgehängt sein. Außerdem ist es möglich, das Waagengefäß bei dieser vorbekannten elektrischen Waage zylindersymmetrisch auszubilden und das bodenseitige Absperrorgan des Waagengefäßes zentrisch unterhalb der Aufhängung anzuordnen. Das Absperrorgan des Waagengefäßes ist pyramidenförmig, insbesondere kegelförmig, mit nach oben gerichteter Spitze ausgebildet. Der Einlaufstutzen der Zuführeinrichtung ist mit Absperrorganen ausgerüstet, wobei die Absperrorgane der Einlaufstutzen der Zuführeinrichtung pyramidenförmig, insbesondere kegelförmig, mit nach oben gerichteter Spitze, ausgebildet sind. Die Absperrorgane der Einlaufstutzen der Zuführeinrichtung weisen neben einer vollständig geöffneten und einer vollständig geschlossenen Stellung eine Zwischenstellung für Feinstrom auf. Das Waagengefäß ist seitlich mit Federn abgestützt, die im wesentlichen nur horizontale Kräfte aufnehmen sollen.

Die US 4 134 466 betrifft eine pneumatische Waage, die einen in einem Gestell aufgehängten Trichter mit einem Zuführrohr aufweist. Ein unteres Verschlusselement weist eine pilzförmige Gestalt auf, während das Einfüllrohr durch einen flachen Absperrschieber absperrbar ist.

Die DE 196 19 748 A1 betrifft ein Verfahren zum Befüllen von Schüttgutbehältern, insbesondere von Fahrzeugen, mit einem gegebenen Beladevolumen an Schüttgut für eine einen Wiegebunker umfassende Beladevorrichtung unter Kontrolle des Beladegewichtes bei welchem
- das Gewicht des Schüttgutes im Wiegebunker mittels einer Wiegevorrichtung kontrolliert und die Befüllung spätestens bei Erreichen des maximalen Beladegewichtes des Schüttgutbehälters gestoppt wird,
- eine Maßnahme zur Vermeidung eines Überschüttens des Schüttgutbehälters im Falle vergleichsweise geringer Schüttdichten des Schüttgutes durchgeführt wird und
- das Schüttgut in den Schüttgutbehälter überführt wird, wobei die Maßnahme zur Vermeidung eines Überschüttens des Schüttgutbehälters darin besteht,
- dass auch das Volumen der im Wiegebunker befindlichen Schüttgutmenge bestimmt wird und dass entweder die Befüllung mit Schüttgut gestoppt wird, sobald das maximale Beladevolumen des Schüttgutbehälters erreicht ist bevor das maximale Beladegewicht erreicht ist,
- oder mittels des im Wiegebunker gemessenen Gewichtes und bestimmten Volumens des Schüttgutes das dem gegebenen maximalen Beladevolumen entsprechende Beladegewicht berechnet und nur eine dem berechneten Beladegewicht entsprechende Menge an Schüttgut dem Wiegebunker aufgegeben wird, sofern dieses das maximale Beladegewicht des Schüttgutbehälters nicht überschreitet. Bei diesem bekannten Verfahren wird die gesamte in den Schüttgutbehälter zu füllende Schüttgutmenge dem Wiegebunker aufgegeben, eine Schüttgutprobemenge dem Wiegebunker aufgegeben, diese Schüttgutprobemenge gewogen und deren Volumen bestimmt wird, mittels des gemessenen Gewichtes der Schüttgutprobemenge und des bestimmten Volumens der Schüttgutprobemenge das dem gegebenen Schüttgutvolumen entsprechende Beladegewicht berechnet und nachfolgend eine dem berechneten Beladegewicht entsprechende Menge an Schüttgut dem Wiegebunker aufgegeben wird. Der Vorrichtung ist eine Einrichtung zur Berechnung der Schüttgutdichte der Schüttung mittels des gemessenen Gewichts und des bestimmten Volumens der Schüttung zugeordnet. Die Volumenbestimmungseinrichtung weist

eine Füllhöhenmesseinrichtung zur Messung der Füllhöhe an mindestens einem Punkt einer Oberfläche einer in den Wiegebunker befindlichen Schüttung auf. Die Füllhöhenmesseinrichtung umfasst zumindest eine oberhalb des Schüttkegels vorgesehene Abstandsmesseinrichtung, welche den Abstand zwischen sich und der Oberfläche bzw. einem Punkt auf der Oberfläche einer in den Wiegebunker befindlichen Schüttung messen kann.

Aus der DE 20 32 529 A1 ist eine automatische Waage mit Grob- und Feinstromzuführung zum Abwägen von körnigen oder granulierten Schüttgütern unterschiedlicher Schüttgewichte vorbekannt, wobei die Auslaufzeit des im Wiegebehälter abgewogenen Materials von einem Zeitglied erfasst und nach Überschreiten einer Vorgabezeit, dieser proportional, der Siloauslauf verzögert geschlossen wird. Die Auslaufzeit des Materials wird mit dem größten Schüttgewicht als Vorgabezeit zugrundegelegt.

### Aufgabe

Der Erfindung liegt die Aufgabe zugrunde, eine Wägevorrichtung, z. B. eine sogenannte Trichterwaage, zur Verwendung in Abfüll- und/oder Dosierprozessen in Industrieanlagen für Schüttgüter wie zum Beispiel Kunststoffgranulaten, Farbkomponenten, Pigmenten oder dergleichen, zu schaffen, bei der sich der Wiegebehälter präzise befüllen lässt, bei möglichst geringer ihn in Schwingungen versetzender mechanischer Beanspruchung.

Des weiteren liegt der Erfindung die Aufgabe zugrunde, ein Verfahren zum optimalen Befüllen des Wiegebehälters einer Wägevorrichtung gemäß der Erfindung bereitzustellen.

### Lösung der Aufgabe betreffend die Wägevorrichtung

Die Aufgabe wird durch die in **Patentanspruch 1** wiedergegebenen Merkmale gelöst.

### Einige Vorteile

Granulatförmige Materialien, die auf Trichterwaagen verarbeitet werden, haben unterschiedliche Schüttgewichte. Trichterwaagen werden gewichtsgesteuert befüllt. Dabei ist in der Regel das Trichtervolumen bekannt. Wünschenswert ist es, die Trichterwaage optimal zu Befüllen, um die höchstmögliche Kapazität der Trichterwaage zu erreichen. Vorteilhaft wäre es, wenn die Nachfüllung der Trichterwaage begänne, wenn der zylindrische Teil des Wiegetrichters leer ist, woraufhin der Wiegetrichter dann so weit zu befüllen wäre, bis er fast voll, aber auf keinen Fall überfüllt ist. Um diesen optimalen Befüllvorgang zu erreichen, ist es bisher notwendig, dass der Bediener bei jedem Materialwechsel das exakte Schüttgewicht des neuen Materials in die Steuerung eingibt. Dies wird in der Praxis oftmals vergessen, oder aber es wird ein falscher Wert eingegeben. Versuche mit den bisher benutzten Quetschventilen, Drehschiebern oder Flachschiebern, die Wiegetrichter so lange zu befüllen, bis keine Gewichtszunahme mehr gemessen wird, führen automatisch zum Überfüllen des Wiegetrichters und des systembedingt vorhandenen Zuführrohres vertikal unter den Schieber. Für die Zeit des Entleerens des Zuführrohres ist dann keine Durchsatzmessung möglich.

Bei der Erfindung kann dagegen der konisch verjüngte Absperrkörper so lange offen gelassen werden, bis kein Material mehr nachfließt, ohne dass es zu einer störenden Überfüllung des Trichters und des Ventilrohres kommt. Die Gründe für diese positiven Eigenschaften liegen zum einen darin, dass der konische Absperrkörper an dem unteren Ende des Ventilrohres in der Ebene der Einfüllöffnung eines Wiegebehälters am unteren Ende des Ventilrohres angeordnet ist, zum anderen aber auch daran, dass der Absperrkörper zum Schließen vertikal nach oben bewegt wird, wobei das Material aus dem Zentrum des Wiegetrichters nach außen zur Wandung des Wiegetrichters geschleudert wird. Eine Überfüllung wird hierdurch sicher verhindert. Somit wird unter anderem der Vorteil erreicht, dass durch den kegelförmigen Absperrkörper das Schüttgut nicht mehr wie ein massiver Körper zentrisch in den Wiegebehälter einprallt und diesen in Schwingungen versetzt, sondern durch die Wandungen des kegelförmigen Absperrkörpers zunächst abgebremst und unter einem entsprechenden Winkel kreisförmig nach außen gegen die Seitenwandungen des Wiegebehälters geleitet wird, so dass eine entsprechend sanfte, abgebremste Einschüttung in den Wiegebehälter erfolgt, was zur Folge hat, dass der Wiegebehälter praktisch nicht mehr in Schwingungen versetzt wird. Auch bildet sich kein zentrischer Schüttkegel unter der Einfüllöffnung. Vielmehr wird der Wiegebehälter annähernd ebenflächig gleichmäßig über seinen Querschnitt gefüllt.

Außerdem ergibt sich der Vorteil, dass der Absperrkörper in seiner Öffnungs- und Schließbewegung nicht mehr blockiert werden kann wie dies zum Beispiel bei Schiebern der Fall ist. Etwaige Schüttgutkomponenten wie zum Beispiel Granulate, die in die Absperrebene des kegelförmigen Absperrkörpers hineingelangen, haben keine Wirkung auf die ordnungsgemäße Absperr- und Hubbeweglichkeit des Absperrkörpers.

Im übrigen braucht der Absperrkörper nur in entgegengesetzten Richtungen, also in Offen- und in Schließstellung bewegt zu werden, was keinen komplizierten Antrieb erforderlich macht.

Des weiteren verbleibt keine für die zu wiegende Charge benötigte "tote" Schüttgutsäule zwischen dem kegelförmigen Absperrkörper und der Einfüllöffnung, die das Wiegeergebnis verfälschen könnte.

Besonders vorteilhaft ist es, dass sich die Absperrebene (Ventilsitz, Absperrfläche) des Absperrkörpers in der Ebene der betreffenden Einfüllöffnung des Wiegebehälters befindet. Dadurch wird die für die Befüllung des Wiegebehälters nicht benötigte Schüttgutmenge praktisch auf Null reduziert.

Das Ventilrohr ist am unteren Ende innen konisch ausgedreht und dem Ventilkegel des Absperrkörpers, der den gleichen Winkel hat wie die innere Ausdrehung des Ventilrohres, angepasst. Das Ventilrohr ist nach oben hin zugleich das Materialzuführrohr. Oben an der Spitze des Ventilkegels ist eine Ventilstange angeordnet, die durch einen geeigneten Antrieb (hydraulisch, pneumatisch, linearmotorisch, oder dergleichen motorisch) angetrieben ist. Der als Ventilkegel ausgebildete Absperrkörper und die Ventilstange sind so ausgebildet und miteinander verbunden, dass sie in Material-Fließrichtung, also von oben nach unten, keine Stufen bilden. Damit soll erreicht werden, dass bei einem Leerfahren der Anlage, zum Beispiel bei einem Materialwechsel, kein Material in der Anlage verbleibt.

Der kegelförmige Absperrkörper befindet sich im Zentrum der Waage, und damit auch im Zentrum des betreffenden Wiegebehälters, so dass eine gleichmäßige Befüllung des Wiegebehälters erreicht wird. Im Gegensatz zum Flachschieber, Drehschieber oder ähnlichen Absperrorganen beim Stand der Technik ist ein Verklemmen bei der erfindungsgemäßen Lösung unmöglich. Während beim Stand der Technik für verschiedene Korngrößen von Schüttgütern und für verschiedene Materialhärten verschiedene Absperrorgane gewählt werden müssen, funktioniert der Absperrkörper bei der erfindungsgemäßen Wägevorrichtung aufgrund seiner besonderen Ausge staltung für alle Materialien und Korngrößen. Da der Absperrkörper sich am unteren Ende des Ventilrohres befindet, ergibt sich auch bei verspätetem Schließen des Absperrkörpers keine Überfüllung des Wiegebehälters. Auch bleibt kein Material in einem Zuführrohr unter dem Absperrkörper hängen oder kann hier verklumpen, welches die Messwerte verfälschen könnte.

Durch den Ventilkegel wird das herunterfallende Material zum einen gebremst, zum anderen wird der aus dem Rohr kommende Materialstrahl aufgelöst und mindestens teilweise gegen die Trichterwand gelenkt und dort weiter gebremst. Insgesamt wird die Nachfüllung sehr viel weicher ausgeführt, so dass die Waage gar nicht oder viel weniger schwingt. Das hat zur Folge, dass die Beruhigungszeit viel kürzer gewählt werden kann, wodurch früher nach dem Befüllen gemessen werden kann. Die Nachfüllung bewirkt keine Materialkegel im Wiegebehälter. Der Füllspiegel ist nahezu eben. Auch das verbessert die Messwerte.

Das Ventilrohr, der Ventilkegel, Ventilsitz und Absperrkörper können bevorzugt aus Edelstahl, im Bedarfsfalle aber auch aus Kunststoff hergestellt werden. Soweit Edelstahl verwendet wird, kann er auch mit einem Oberflächenschutz oder aus Aluminium bestehen. Je nach Einsatzgebiet sind allerdings auch Materialien wie Messing, Holz, Polyamid oder dergleichen, möglich.

Es ist auch denkbar, den Erfindungsgedanken nicht nur auf beliebige Wägevorrichtungen, bevorzugt auf sogenannte Trichterwaagen zur Verwendung in der Kunststoffindustrie, anzuwenden. Vielmehr sind auch Anlagen denkbar, bei denen nicht nur die Wiegebehälter als Trichter ausgebildet sind, sondern ein gesamtes Dosiergerät mit dem Wiegebehälter oder dem Trichter gewogen wird. Die Befüllung des Wiegebehälters oder Trichters eines solchen gewogenen Dosiergerätes wird aber in gleicher Weise wie bei Wägevorrichtungen oder Trichterwaagen vorgenommen, ohne den Erfindungsgedanken zu verlassen. Dem Wiegebehälter ist auf gegenüberliegenden Seiten je mindestens eine vertikal angeordnete Stange zugeordnet, denen jeweils ein Auflager zugeordnet ist, mit dem der Wiegebehälter gehalten ist. Die Stangen sind an einer Wiegegabel angeordnet, denen eine Wiegezelle zugeordnet ist. Dadurch ergibt sich eine zentrische oder annähernd zentrische Gewichtskrafteinleitung in die Wiegezelle.

### Weitere erfinderische Ausgestaltungen

Weitere erfinderische Ausgestaltungen sind in den **Patentansprüchen 2** bis **13** beschrieben.

Bei der Ausführungsform nach **Patentanspruch 2** wird der kegelförmige Absperrkörper über eine Kolbenstange hubbeweglich motorisch angetrieben. Die Kolbenstange durchsetzt ein Ventilrohr, das an einen Vorratsbehälter angeschlossen ist.

Die Kolbenstange ist bei der Ausführungsform nach **Patentanspruch 3** einer abwechselnd beidseitig durch Druckmitteldruck, insbesondere durch Druckluft, zu beaufschlagende Kolben-Zylinder-Einheit zugeordnet.

Gemäß **Patentanspruch 4** ist die Kolbenstange über eine Gewindehülse mit einer Ventilstange verbunden, die an ihrem unteren Ende den kegelförmigen Absperrkörper aufweist.

Vorteilhafterweise ist die Kolben-Zylinder-Einheit in einem Schutzrohr angeordnet - **Patentanspruch 5**.

Gemäß **Patentanspruch 6** sind auch die Pneumatikleitungen in dem Schutzrohr angeordnet.

Bei der Ausführungsform nach **Patentanspruch 7** ist das Schutzrohr koaxial in dem Vorratstrichter und damit auch koaxial zu dem Ventilrohr angeordnet, während bei der Ausführungsform nach **Patentanspruch 8** das Schutzrohr aus dem koaxialen Mittenbereich seitwärts verlagert ist. Hierdurch ergibt sich der Vorteil, dass die Zuführung des Schüttgutes durch das Schutzrohr nicht behindert wird.

**Patentanspruch 9** beschreibt eine Wägevorrichtung, bei der der Kegelwinkel des kegelförmigen Absperrkörpers gleich oder größer ist als der Böschungswinkel des betreffenden Schüttgutes. Auf diese Weise wird vermieden, dass Schüttgut sich auf der kegelförmigen Mantelfläche des Absperrkörpers ablagern kann.

Dagegen beträgt bei der Lösung nach **Patentanspruch 10** der Kegelwinkel des Absperrkörpers 90°, während der Kegelwinkel bei der Lösung nach **Patentanspruch 11 60°** beträgt.

Vorteilhafterweise besteht dieser Absperrkörper aus Stahl, vorzugsweise aus rostfreiem Stahl, zum Beispiel Chromnickelstahl. Bei der Ausführungsform nach **Patentanspruch 12** sind der Ventilsitz und der Absperrkörper aus Stahl hergestellt, so dass in Absperrstellung Stahl auf Stahl zu Liegen kommt.

Dagegen ist bei der Ausführungsform nach **Patentanspruch 13** der kegelförmige Absperrkörper im Bereich seines Ventilsitzes mit einem gummielastische Eigenschaften aufweisenden ringförmigen Kunststoffkörper, z. B. aus Polyurethan-Kunststoff, versehen. Polyurethan-Kunststoff besitzt nicht nur eine hohe Alterungs- und Ozonbeständigkeit, sondern auch eine entsprechende Rückprallelastizität und Shorehärte, so dass auch abrasive Schüttgüter auf die Lebensdauer des Ventilsitzes keinen negativen Einfluss nehmen können.

### Lösung der Aufgabe betreffend das Verfahren

Diese Aufgabe wird durch die in **Patentanspruch 14** wiedergegebenen Merkmale gelöst.

### Einige Vorteile

Bei dem bisherigen Wägeverfahren musste für die mengenmäßig richtige Befüllung des Wiegebehälters das Schüttgewicht des jeweiligen Materials eingegeben werden. Daraus und aus dem in der Steuerung oder Regelung hinterlegten Volumen des Trichters wurden dann die Füllgrenzen (Nachfüll-Start und Nachfüll-Stopp) errechnet. Bei dem erfindungsgemäßen Verfahren gemäß **Patentanspruch 14** wird beim ersten Befüllen des Wiegebehälters der Absperrkörper so lange geöffnet, bis das Gewicht des Wiegebehälters sich nicht mehr erhöht.

### Weitere erfinderische Ausgestaltungen

Bei der Lösung nach **Patentanspruch 15** wird der Absperrkörper sehr viel länger in Offenstellung gesteuert, so dass der Trichter in jedem Fall voll ist. Nach dem Schließen des Absperrkörpers befindet sich im Wiegebehälter genau die maximal mögliche Füllmenge. Empirisch kann im Bedarfsfalle noch ein Abschlagwert in Ansatz gebracht werden.

Daraus werden jeweils die Füllgrenzen für die folgenden Befüllungen automatisch berechnet und gehandhabt. Bei den folgenden Befüllungen wird der Wiegebehälter, zum Beispiel bei einer Trichterwaage, optimal und in kürzester Zeit befüllt.

Gemäß **Patentanspruch 16** lässt sich aus der Menge der ersten Befüllung und dem bekannten Wiegebehältervolumen außerdem das Schüttgewicht des Materials berechnen. Dieser Wert wird für andere Funktionen benötigt und steht dadurch ohne Eingabe durch den Bediener zur Verfügung. Diese Verfahrensweise ermöglicht somit die automatische Schüttgewichtsermittlung.

Bei dem Verfahren gemäß **Patentanspruch 17** kann mittels des Schüttgewichts und der Füllzeit, die eine Auskunft über die Fließfähigkeit des Materials ergibt, errechnet werden, welche Dosierleistung die jeweils in der Anlage verwendete Dosierschnecke oder die jeweils verwendeten Dosierschnecken aufweisen oder annähernd haben. Aus diesem Wert lässt sich zum Beispiel beim Start der Dosierschnecke die jeweils in Betracht kommende Drehzahl der Schnecke an einem Steuerpult einstellen, wobei eine Steuer- oder Regelungsanlage dann zum Beispiel über die Drehzahl, gegebenenfalls auch über das aufzuwendende Drehmoment des Motors die Förderleistung (Dosierleistung) der betreffenden Dosierschnecke oder der Dosierschnecken gesteuert bzw. geregelt werden kann.

In der Konfiguration einer gravimetrischen Mischanlage ist für jedes Dosiergerät der verwendete Motor und damit die maximal mögliche Drehzahl einer Dosierschnecke, das Volumen des Wiegebehälters und die maximal mögliche Ausstoßleistung für alle Schneckengrößen, die in einem Dosiergerät verwendet werden können, gespeichert. Neben anderen Faktoren wie zum Beispiel Korngröße, Kornform und Oberfläche des Granulats ist das Schüttgewicht der Hauptfaktor für die Ausstoßleistung einer Dosierschnecke bestimmter Größe mit einem bestimmten Material. Wenn ein Material zum ersten Mal benutzt wird, kann über das vorher errechnete oder vom Bediener eingegebene Schüttgewicht die zu erwartende Leistung ermittelt und das Dosiergerät mit diesem Wert gestartet werden.

In der Zeichnung ist die Erfindung beispielsweise veranschaulicht. Es zeigen:
- Fig. 1: eine Wägevorrichtung, teils in der Ansicht, teils im Schnitt, im Bereich des Wiegetrichters abgebrochen dargestellt;
- Fig. 2: eine weitere Ausführungsform, ebenfalls teils im Schnitt, teils im Bereich des Wiegetrichters abgebrochen dargestellt und
- Fig. 3: eine teilweise Seitenansicht zu Fig. 1 und 2, im Bereich des Wiegetrichters, ebenfalls abgebrochen dargestellt.

In der Zeichnung ist die Erfindung in Anwendung auf eine Wägevorrichtung zur Verwendung in Abfüll- und/oder Dosierprozessen in Industrieanlagen für Schüttgüter wie zum Beispiel Kunststoffgranulate, Farbkomponenten, Pigmente oder dergleichen, dargestellt, wobei aus Gründen der Vereinfachung nur die zum Verständnis der Erfindung wesentlichen Teile veranschaulicht sind.

Mit dem Bezugszeichen 1 ist ein Vorratstrichter bezeichnet, der oben durch einen Deckel 2 verschlossen ist. Dem Vorratstrichter 1 wird durch eine nicht dargestellte Fördervorrichtung Schüttgut, zum Beispiel Kunststoffgranulat oder dergleichen, zum Beispiel durch ein ebenfalls nicht dargestelltes pneumatisches Förderrohr, durch eine gegebenenfalls in dem Deckel 2 vorgesehene nicht gezeichnete Öffnung, zugeführt.

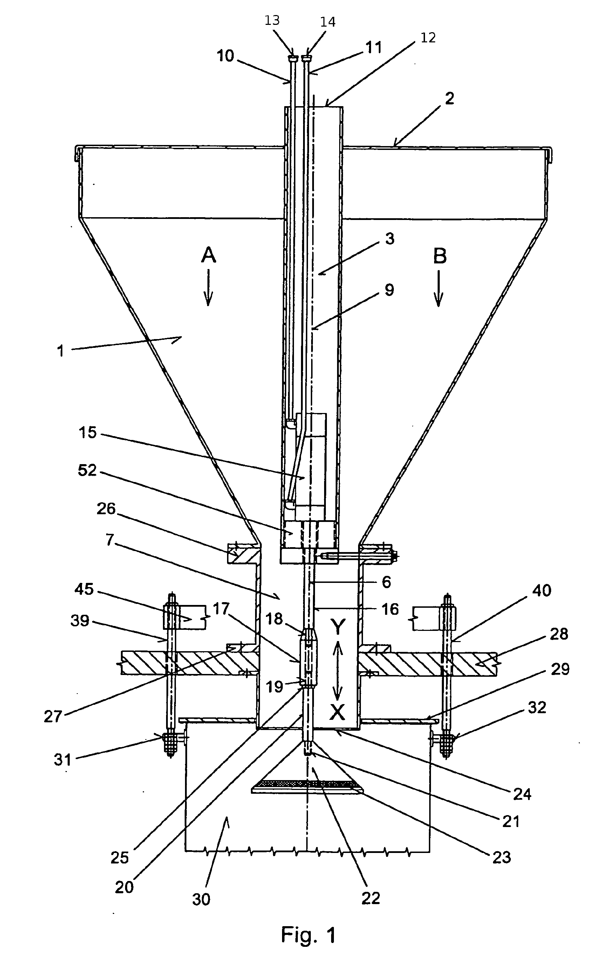

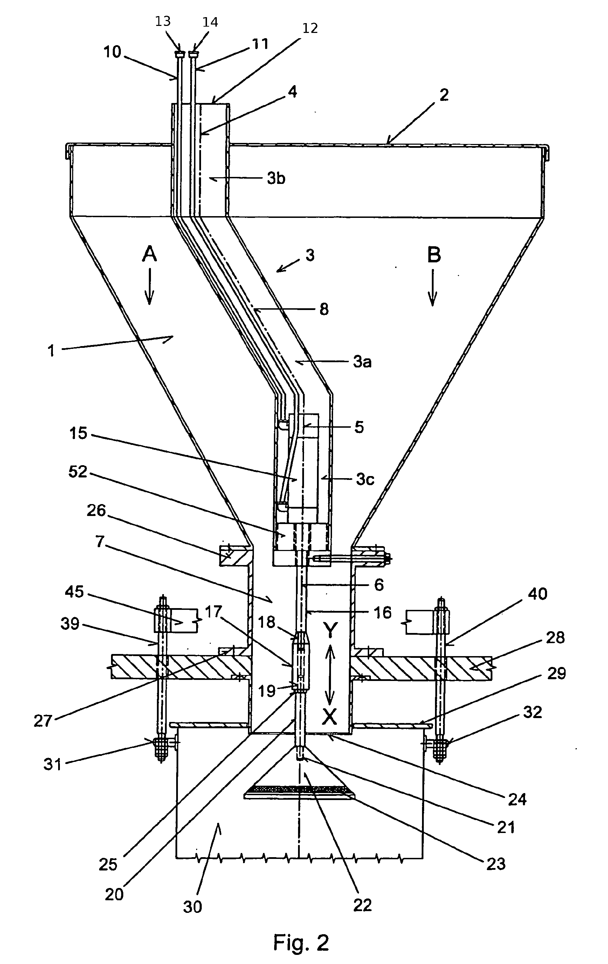

Bei der Ausführungsform nach Fig. 1 wird der Vorratsbehälter 1 koaxial von einem Schutzrohr 3 durchgriffen, das durch den Deckel 2 nach außen herausgeführt ist. Das Schutzrohr 3 besteht bei der Ausführungsform nach Fig. 2 aus insgesamt drei Abschnitten 3a, 3b und 3c. Die Längsachsen 4 und 5 der Abschnitte 3b und 3c verlaufen parallel zueinander, wobei die Längsachse 5 koaxial zur Längsachse 6 eines Ventilrohres 7 verläuft. Der mittlere Abschnitt 3a des Schutzrohres 3 verläuft dagegen mit seiner Längsachse 8 unter einem stumpfen Winkel sowohl zur Längsachse 4 des Abschnittes 3b als auch zur Längsachse 5 des Abschnittes 3c und ist zur Seitenwand des Vorratstrichters 1 hingerichtet und gibt dadurch den mittleren Bereich des Vorratstrichters 1 frei. Die Anordnung kann auch so getroffen sein, dass der Abschnitt 3b noch mehr aus der Mitte entweder nach rechts oder nach links - in der Zeichnungsebene der Fig. 2 gesehen - verschoben ist und sich der mittlere Abschnitt 3a noch näher an der Seitenwand des Vorratstrichters 1 befindet. Auf diese Weise kann die Zuführung des Schüttgutes im mittleren Bereich des Vorratstrichters 1 (nicht dargestellt) erfolgen.

Dagegen verläuft die Längsachse 9 der Fig. 1 koaxial zur Längsachse 6 des Ventilrohres 7 und damit koaxial zur Längsachse des Vorratstrichters 1.

In dem Schutzrohr 3 sind sowohl bei der Ausführungsform nach Fig. 1 als auch bei der Ausführungsform nach Fig. 2 zwei als Pneumatikschläuche ausgebildete Pneumatikleitungen 10 und 11 angeordnet, die an ihrem aus der Mündungsöffnung 12 des Schutzrohres 3 herausgeführten freien Endabschnitt je eine Pneumatikschnellkupplung 13 bzw. 14 aufweisen, durch die die Pneumatikleitungen 10 und 11 an eine geeigneten Druckluftquelle (nicht dargestellt) angeschlossen sind.

Die Pneumatikleitungen 10 und 11 führen zu einer als Pneumatikzylinder ausgebildeten Kolben-Zylinder-Einheit 15 mit Aufnahme 52, so dass ein darin angeordneter Kolben (nicht dargestellt) abwechselnd beidseitig gesteuert mit Luftdruck beaufschlagt werden kann. Mit dem Kolben der Kolben-Zylinder-Einheit 15 ist eine Kolbenstange 16 verbunden, die an ihrem Ende mit einer Gewindehülse 17 versehen ist, die mit der Kolbenstange 16 über Gewinde 18 gekuppelt ist. Die Gewindehülse 17 weist an ihrem entgegengesetzten Ende ebenfalls Gewinde 19 auf, durch die sie mit einer Ventilstange 20 gekuppelt ist. Die Ventilstange 20 besitzt an ihrem unteren Ende 21 ebenfalls Gewinde, durch das die Ventilstange 20 mit einem als Ventilkegel ausgebildeten Absperrkörper 22 verbunden ist. Der kegelförmige Absperrkörper 22 besitzt im Abstand von dem unteren Bereich der Ventilstange 20 eine Dichtfläche 23, die bei den dargestellten Ausführungsformen aus einem aus Polyurethan-Kunststoff bestehenden Körper gebildet ist, der in eine umlaufende Ringnut eingearbeitet ist und mit einem an der unteren Mündungsöffnung (in der Zeichnungsebene) gebildeten Ventilsitz 24 des Ventilrohres 7 absperrend nach entsprechender Hubbeaufschlagung der Kolben-Zylinder-Einheit zusammenwirkt. Der Absperrkörper 22 ist somit in Richtung X bzw. Y je nach Beaufschlagung des Kolbens der Kolben-Zylinder-Einheit 15 beweglich.

Die Steuerung geschieht durch eine nicht dargestellte Steuerungsanlage, die in die Prozesssteuerung einbezogen ist.

Bei 25 ist eine Kontermutter angeordnet.

Das Ventilrohr 7 besitzt an den entgegengesetzten Enden Flansche 26, 27 und ist über Schrauben, die lediglich durch Mittellinien angedeutet sind, einerseits mit dem Vorratstrichter 1 und andererseits mit einer Wand 28 fest, aber lösbar, verbunden.

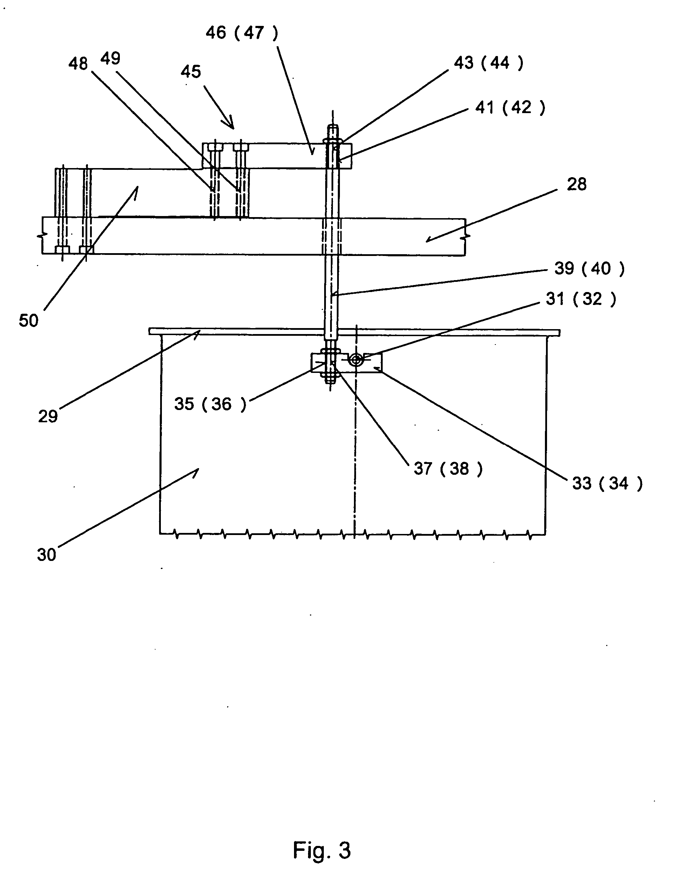

Das Ventilrohr 7 mündet mit einem geringen Längenabschnitt durch eine Öffnung eines Deckels 29, der die obere Öffnung eines als Wiegetrichter ausgebildeten Wiegebehälters 30 abdeckt. Der Wiegebehälter 30 besitzt auf gegenüberliegenden Seiten orthogonal zu seiner Längsachse abstehende Bolzen 31 bzw. 32, die auf jeder Seite in je einem Auflager 33 bzw. 34 und dafür vorgesehene Aussparungen aufruhen, die nach oben jeweils geöffnet sind und in Form von Langlöchern ausgestaltet sind (Fig. 3). Jedes Auflager 33, 34 besitzt je eine Durchgangsöffnung 35, 36, durch die ein zapfenförmiges Ende 37 bzw. 38 je einer Stange 39 bzw. 40 hindurchgreifen und hier durch Muttern und Kontermuttern gesichert angeordnet sind. Am entgegengesetzten Ende durchgreifen die Stange 39 und 40 entsprechende Durchgangsbohrungen 41, 42 mit je einem zapfenförmigen Ansatz 43, 44 einer Wiegegabel 45, die in der Draufsicht etwa U-förmig gestaltet ist und U-Schenkel 46 bzw. 47 aufweist, mit denen jeweils die Stangen 39, 40 verbunden sind. Die Stangen 39, 40 sind ebenfalls durch Schrauben und Kontermuttern mit der Wiegegabel 45 gekuppelt. Die Wiegegabel 45 ist durch mehrere Schrauben 48, 49 mit einer Wiegezelle 50 gekuppelt, die an der Wand 28 angeordnet ist.

Die Wirkungsweise der aus der Zeichnung ersichtlichen Wägevorrichtung ist folgende:

Dem Vorratstrichter 1 wird durch eine Zuführöffnung des Deckels 2 geeignetes Schüttgut, zum Beispiel Kunststoffgranulat, pneumatisch oder in sonstiger Art und Weise, beispielsweise auch über Dosierschnecken, über Rohre oder dergleichen, zugeführt. Durch entsprechende Druckluftbeaufschlagung der Kolben-Zylinder-Einheit 15 wird die Kolbenstange 16 in Richtung X gesteuert und hebt den kegeligen Absperrkörper 22 von seinem Ventilsitz 24 ab. Dadurch kann aus dem Vorratstrichter 1 Schüttgut in den Wiegebehälter 30 unter dem Einfluss der Schwerkraft in Richtung A-B hineinfallen. Es trifft hierbei auf die Kegelmantelfläche des Absperrkörpers 22 und wird entsprechend dem Neigungswinkel zu der inneren Seitenwand des Wiegetrichters 30 hingelenkt. Ist die entsprechende Einfüllmenge erreicht, wird durch entgegengesetzte Beaufschlagung der Kolben-Zylinder-Einheit 15 der Absperrkörper 22 in Richtung Y gesteuert, wobei die Dichtfläche 23 auf den Ventilsitz 24 absperrend aufruht und dadurch die weitere gravimetrische Zufuhr von Schüttgut in den Wiegetrichter 30 unterbindet. Die Absperrung geschieht hierbei unmittelbar in der Ebene der Einfüllöffnung des Deckels 29 des Wiegebehälters 30.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

## Patentansprüche

1. Wägevorrichtung zur Verwendung in Abfüll- und/oder Dosierprozessen in Industrieanlagen für Schüttgüter - Kunststoffgranulat, Farbkomponenten, Pigmente -, mit einem Wiegebehälter (30), einem Ventilrohr (7), zum Zuführen des Schüttgutes in den Wiegebehälter (30) und das an seiner unteren Mündungsöffnung einen konischen Ventilsitz (24) aufweist, mit dem ein in Absperr- und Offenstellung (X bzw. Y) motorisch steuerbarer, in Richtung auf die Einfüllöffnung sich konisch verjüngender Absperrkörper (22) dichtend zusammenwirkt, und dass die Absperrebene des Absperrkörpers (22) in der Ebene der Einfüllöffnung eines den Wiegebehälter (30) an seiner Oberseite verschließenden Deckels (29) liegt, durch die das Ventilrohr (7) das Schüttgut in den Wiegebehälter (30) zuführt, **dadurch gekennzeichnet, dass** der Wiegebehälter (30) auf gegenüberliegenden Seiten Bolzen (31, 32) aufweist, mit denen er in je einem Auflager (33, 34) aufruht, die über je eine Stange (39, 40) mit einer in der Draufsicht etwa U-förmig gestalteten Wiegegabel (45) verbunden ist, der eine Wiegezelle (50) zugeordnet ist, und dass mit jedem der U-Schenkel (46, 47) je eine der Stangen (39, 40) gekoppelt ist, und der Steg der U-förmigen Wiegegabel (45) mit der Wiegezelle (50) zusammenwirkt.

2. Wägevorrichtung nach Anspruch 1, **dadurch gekennzeichnet, dass** der kegelförmige Absperrkörper (22) über eine Kolbenstange (16) durch eine abwechselnd beidseitig mit Druckmitteldruck, insbesondere pneumatisch, zu beaufschlagende Kolben-Zylinder-Einheit (15) in entgegengesetzten Richtungen (X bzw. Y) hubbeweglich angetrieben ist.

3. Wägevorrichtung nach Anspruch 2, **dadurch gekennzeichnet, dass** die Kolbenstange (16) und die Kolben-Zylinder-Einheit (15) koaxial zueinander angeordnet sind.

4. Wägevorrichtung nach Anspruch 2 oder 3, **dadurch gekennzeichnet, dass** die Kolbenstange (16) über eine Gewindehülse (17) mit einer Ventilstange (20) lösbar gekuppelt ist, die über Gewinde mit dem kegelförmigen Absperrkörper (22) gekuppelt ist.

5. Wägevorrichtung nach Anspruch 2 oder einem der darauffolgenden Ansprüche, **dadurch gekennzeichnet, dass** die Kolben-Zylinder-Einheit (15) in einem Schutzrohr (3) angeordnet ist, das den Vorratstrichter (1) durchgreift und in das Ventilrohr (7) ausmündet.

6. Wägevorrichtung nach Anspruch 2 oder einem der Ansprüche 3 und 4, **dadurch gekennzeichnet, dass** Pneumatikleitungen (10, 11) für die Kolben-Zylinder-Einheit (15) ebenfalls in dem Schutzrohr (3) angeordnet sind.

7. Wägevorrichtung nach Anspruch 5, **dadurch gekennzeichnet, dass** das Schutzrohr (3) koaxial zur Längsachse des Vorratstrichters (1) angeordnet ist.

8. Wägevorrichtung nach Anspruch 5, **dadurch gekennzeichnet, dass** das Schutzrohr (3) zumindest auf einem großen Teil seiner axialen Länge außermittig in dem Vorratstrichter (1) angeordnet ist.

9. Wägevorrichtung nach Anspruch 1 oder einem der darauffolgenden Ansprüche, **dadurch gekennzeichnet, dass** der Kegelwinkel des Absperrkörpers (22) ≥ als der Böschungswinkel des betreffenden Schüttgutes bemessen ist.

10. Wägevorrichtung nach Anspruch 1 oder einem der darauffolgenden Ansprüche, **dadurch gekennzeichnet, dass** der Kegelwinkel des Absperrkörpers (22) 90° beträgt.

11. Wägevorrichtung nach Anspruch 1 oder einem der darauffolgenden Ansprüche, **dadurch gekennzeichnet, dass** der Kegelwinkel des Absperrkörpers (22) 60° beträgt.

12. Wägevorrichtung nach Anspruch 1 oder einem der darauffolgenden Ansprüche, **dadurch gekennzeichnet, dass** Ventilsitz (24) und der Absperrkörper (22) aus Stahl bestehen.

13. Wägevorrichtung nach Anspruch 1 oder einem der darauffolgenden Ansprüche, **dadurch gekennzeichnet, dass** Abdichtteile des Absperrkörpers (22) und/oder des Ventilsitzes (24) aus Kunststoff, vorzugsweise aus Polyurethan, bestehen.

14. Verfahren zum Befüllen eines Wiegebehälters (30) bei einer Wägevorrichtung nach Anspruch 1 zur Verwendung in Abfüll- und/oder Dosierprozessen in Industrieanlagen für Schüttgüter - Kunststoffgranulat, Farbkomponenten, Pigmente -, mit einem Wiegebehälter (30), einem Ventilrohr (7), zum Zuführen des Schüttgutes in den Wiegebehälter (30) und das an seiner unteren Mündungsöffnung einen konischen Ventilsitz (24) aufweist, mit dem ein in Absperr- und Offenstellung (X bzw. Y) motorisch steuerbarer, in Richtung auf die Einfüllöffnung sich konisch verjüngender Absperrkörper (22) dichtend zusammenwirkt, und dass die Absperrebene des Absperrkörpers (22) in der Ebene der Einfüllöffnung eines den Wiegebehälter (30) an seiner Oberseite verschließenden Deckels (29) liegt, durch die das Ventilrohr (7) das Schüttgut in den Wiegebehälter (30) zuführt, wobei der Wiegebehälter (30) auf gegenüberliegenden Seiten Bolzen (31, 32) aufweist, mit denen er in je einem Auflager (33, 34) aufruht, die über je eine Stange (39, 40) mit einer in der Draufsicht etwa U-förmig gestalteten Wiegegabel verbunden ist, der eine Wiegezelle (50) zugeordnet ist, und dass mit jedem der U-Schenkel je eine der Stangen (39, 40) gekoppelt ist, und der Steg der U-förmigen Wiegegabel (45) mit der Wiegezelle (50) zusammenwirkt, **dadurch gekennzeichnet, dass** bei dem ersten Befüllvorgang der Absperrkörper (22) so lange in Offenstellung gesteuert wird, bis sich das Gewicht des Wiegebehälters (30) nicht mehr erhöht, woraus die Füllgrenze oder Füllgrenzen, gegebenenfalls abzüglich eines empirischen Abschlags für die folgenden Befüllungen des Wiegebehälters (30) automatisch berechnet, in einem elektronischen Datenspeicher abgespeichert und bei den folgenden Befüllungen des Wiegebehälters (30) als Steuerungs- oder Regelgröße benutzt wird.

15. Verfahren nach Anspruch 14, **dadurch gekennzeichnet, dass** der Absperrkörper (22) so lange in Offenstellung gesteuert wird, dass der Wiegebehälter (30) in jedem Fall mit Schüttgut gefüllt ist und dass nach dem Schließen des Absperrkörpers (22) sich im Wiegebehälter (30) die maximal mögliche Füllgutmenge befindet, und dass gegebenenfalls nach Berücksichtigung eines empirischen Abschlagswertes der daraus sich ergebende Wert automatisch berechnet und in einem elektronischen Speicher eines Rechners eingegeben und bei den folgenden Befüllungen des Wiegebehälters (30) steuerungs- oder regelungstechnisch berücksichtigt wird.

16. Verfahren nach Anspruch 14, **dadurch gekennzeichnet, dass** aus der Menge der ersten Befüllung und dem bekannten Wiegebehältervolumen das Schüttgutgewicht des Materials automatisch berechnet wird und zur Regelung oder Steuerung anderer Funktionen in die Steuerung und Regelung eingegeben wird.

17. Verfahren nach Anspruch 14, **dadurch gekennzeichnet, dass** nach der ersten Befüllung des Wiegebehälters (30) die genaue Zeit, d.h. Füllzeit, für das Einfüllen einer bestimmten Materialmenge, d.h. Fließfähigkeit, ermittelt wird und zusammen mit dem Schüttgewicht als Steuerungs- oder Regelungswert in einen Rechner zum Bestimmen der Dosierleistung für die betreffende Dosierschnecke verwendet wird, derart, dass der ermittelte Wert zur Steuerung oder Regelung der Drehmomentenaufnahme oder der Drehzahl des Antriebsmotors der betreffenden Dosierschnecke verwendet wird.

## Claims

1. Weighing device for use in filling and dosing processes in industrial plant for bulk goods (plastic granulate, paint constituents, pigments), with a weighing tank (30), a valve pipe (7) for feeding the bulk material into the weighing tank (30) and which has a tapered valve seat (24) at its bottom outlet opening, with which a closing body (22), which can be moved by motor power into the closing and opening position (X and Y respectively) and which tapers towards the filling opening, interacts to form a seal, where the closing level of the closing body (22) is located at the level of the filling opening of a cover (29) sealing the weighing tank (30) on its upper side, through which the valve pipe (7) feeds the bulk material into the weighing tank (30), **characterised in that** the weighing tank (30) has pins (31, 32) on opposing sides, each of which rests on one support bearing (33, 34), each of which is connected by a rod (39, 40) with a weighing fork (45) which is roughly U-shaped in horizontal projection, and to which a weighing cell (50) is assigned, and where each of the rods (39, 40) is coupled to one of the legs (46, 47) of the U, and the bridge of the U-shaped weighing fork (45) interacts with the weighing cell (50).

2. Weighing device according to claim 1, **characterised in that** the tapered closing body (22) is driven in a lifting motion in opposite directions (X and Y) via a piston rod (16) by a piston-cylinder unit (15) which is pressurised alternately on either side by a preferably pneumatic pressure medium.

3. Weighing device according to claim 2, **characterised in that** the piston rod (16) and the piston-cylinder unit (15) are arranged coaxially to one another.

4. Weighing device according to claim 2 or claim 3, **characterised in that** the piston rod (16) is coupled detachably via a threaded sleeve (17) to the valve rod (20) which is coupled by the thread to the tapered closing body (22).

5. Weighing device according to claim 2 or any of the subsequent claims, **characterised in that** the piston-cylinder unit (15) is arranged in a protective tube (3), which passes through the storage hopper (1) and discharges into the valve pipe (7).

6. Weighing device according to claim 2 or either of the claims 3 and 4, **characterised in that** the pneumatic pipes (10, 11) for the piston-cylinder unit (15) are also arranged in the protective tube (3).

7. Weighing device according to claim 5, **characterised in that** the protective tube (3) is arranged coaxially to the lengthwise axis of the storage hopper (1).

8. Weighing device according to claim 5, **characterised in that** the protective tube (3) is arranged off centre in the storage hopper (1) over at least a large part of its axial length.

9. Weighing device according to claim 1 or any of the subsequent claims, **characterised in that** the angle of taper of the closing body (22) is dimensioned ≥ than the natural slope of the bulk material concerned.

10. Weighing device according to claim 1 or any of the subsequent claims, **characterised in that** the angle of taper of the closing body (22) is 90°.

11. Weighing device according to claim 1 or any of the subsequent claims, **characterised in that** the angle of taper of the closing body (22) is 60°.

12. Weighing device according to claim 1 or any of the subsequent claims, **characterised in that** the valve seat (24) and the closing body (22) are made of steel.

13. Weighing device according to claim 1 or any of the subsequent claims, **characterised in that** the sealing elements of the closing body (22) and/or the valve seat (24) are made of synthetic material, preferably polyurethane.

14. Process for filling a weighing tank (30) with a weighing device according to claim 1 for use in filling and dosing processes in industrial plant for bulk goods (plastic granulate, paint constituents, pigments), with a weighing tank (30), a valve pipe (7) for feeding the bulk material into the weighing tank (30) and which has a tapered valve seat (24) at its bottom outlet opening, with which a closing body (22), which can be moved by motor power into the closing and opening position (X and Y respectively) and which tapers towards the filling opening, interacts to form a seal, where the closing level of the closing body (22) is located at the level of the filling opening of a cover (29) sealing the weighing tank (30) on its upper side, through which the valve pipe (7) feeds the bulk material into the weighing tank (30), where the weighing tank (30) has pins (31, 32) on opposing sides, each of which rests on one support bearing (33, 34), each of which is connected by a rod (39, 40) with a weighing fork which is roughly U-shaped in horizontal projection, and to which a weighing cell (50) is assigned, and where each of the rods (39, 40) is coupled to one of the legs of the U, and the bridge of the U-shaped weighing fork (45) interacts with the weighing cell (50), **characterised in that** during the first filling operation, the closing body (22) is controlled to remain in the open position until the weight of the weighing tank (30) no longer increases, from which the filling limit or limits is (are) automatically calculated (if necessary minus an empirical deduction for subsequent filling operations of the weighing tank (30)), stored in an electronic data memory, and then used as a control or reference quantity for the subsequent filling operations of the weighing tank (30).

15. Process according to claim 14, **characterised in that** the closing body (22) is controlled to remain in the open position until the weighing tank (30) is in any case filled with bulk material, and that, when the closing body (22) has closed, the maximum possible amount of material is in the weighing tank (30), and that the resulting value, if necessary after deduction of the empirical figure, is automatically calculated, stored in an electronic computer memory, and used for control and reference purposes in the subsequent filling operations of the weighing tank (30).

16. Process according to claim 14, **characterised in that** the weight of the bulk material is calculated automatically from the quantity of the first filling operation and the known volume of the weighing tank, and is entered into the control system in order to control and regulate other functions.

17. Process according to claim 14, **characterised in that**, after the first filling operation of the weighing tank (30), the exact time (i.e. filling time) required for feeding in a certain quantity of material (i.e. flowability) is calculated and used in combination with the bulk weight as a control and reference value in a computer for determining the dosing capacity of the dosing screw conveyor, in such a way that the value thus determined is used to control the torque or the speed of the motor driving the dosing screw conveyor.

## Revendications

1. Dispositif de pesage à utiliser dans des processus de soutirage et/ou dosage dans des installations industrielles pour matières en vrac (granulés plastiques, composants de peintures, pigments), comprenant un récipient de pesée (30), un tube à vanne (7) destiné à amener la matière en vrac dans le récipient de pesée (30) et présentant un siège de vanne conique (24) contre l'orifice d'aboutissement inférieur, siège avec lequel interagit de façon étanchéisante un corps de fermeture (22) pilotable par moteur jusque sur la position de fermeture et la position d'ouverture (X et Y respectivement) et allant en se rétrécissant selon une géométrie conique en direction de l'orifice de remplissage, et sachant que le plan de fermeture du corps de fermeture (22) se situe sur le plan de l'orifice de remplissage d'un couvercle (29) obturant le dessus du récipient de pesée (30), dessus à travers lequel le tube de vanne (7) amène la matière en vrac dans le récipient de pesée (30), **caractérisé en ce que** le récipient de pesée (30) présente des goujons (31, 32) sur des côtés opposés, goujons par lesquels il repose respectivement dans un appui (33, 34) qui est relié via une barre (39, 40) avec une fourche de pesée (45) configurée approximativement en U lorsque vue de dessus, fourche à laquelle est affectée une cellule de pesée (50), et **en ce que** chacune des barres (39, 40) est couplée respectivement avec l'une des branches en U (46, 47), et **en ce que** la nervure de la fourche de pesée (45) en U interagit avec la cellule de pesée (50).

2. Dispositif de pesage selon la revendication 1, **caractérisé en ce que** le corps de fermeture (22) conique est entraîné via une tige de piston (16) par une unité vérin à piston (15) à mettre des deux côtés en alternance sous pression d'un fluide, d'air comprimé en particulier, unité qui décrit une course dans deux directions opposées (X et Y).

3. Dispositif de pesage selon la revendication 2, **caractérisé en ce que** la tige de piston (16) et l'unité vérin à piston (15) sont agencées coaxialement l'une par rapport à l'autre.

4. Dispositif de pesage selon la revendication 2 ou 3, **caractérisé en ce que** la tige de piston (16) est, via une douille filetée (17), raccordée de façon détachable à une tige (20) de vanne, tige qui est raccordée via un filetage au corps de fermeture (22) conique.

5. Dispositif de pesage selon la revendication 2 ou l'une des revendications suivantes, **caractérisé en ce que** l'unité vérin à piston (15) est agencée dans un tube de protection (3) qui traverse la trémie de stockage (1) et aboutit dans le tube de vanne (7).

6. Dispositif de pesage selon la revendication 2 ou l'une des revendications 3 et 4, **caractérisé en ce que** les conduites pneumatiques (10, 11) destinées à l'unité vérin à piston (15) sont également agencées dans le tube de protection (3).

7. Dispositif de pesage selon la revendication 5, **caractérisé en ce que** le tube de protection (3) est agencé coaxialement à l'axe longitudinal de la trémie de stockage (1).

8. Dispositif de pesage selon la revendication 5, **caractérisé en ce que** le tube de protection (3) est agencé décentré sur au moins une grande partie de sa longueur axiale dans la trémie de stockage (1).

9. Dispositif de pesage selon la revendication 1 ou l'une des revendications précédentes, **caractérisé en ce que** l'angle de conicité du corps de fermeture (22) a été dimensionné supérieur ou égal à l'angle de talus de la matière en vrac concernée.

10. Dispositif de pesage selon la revendication 1 ou l'une des revendications suivantes, **caractérisé en ce que** l'angle de conicité du corps de fermeture (22) est de 90°.

11. Dispositif de pesage selon la revendication 1 ou l'une des revendications suivantes, **caractérisé en ce que** l'angle de conicité du corps de fermeture (22) est de 60°.

12. Dispositif de pesage selon la revendication 1 ou l'une des revendications suivantes, **caractérisé en ce que** le siège de vanne (24) et le corps de fermeture (22) sont en acier.

13. Dispositif de pesage selon la revendication 1 ou l'une des revendications suivantes, **caractérisé en ce que** les pièces d'étanchéisation du corps de fermeture (22) et/ou du siège de vanne (24) sont en matière plastique, de préférence en polyuréthane.

14. Procédé pour remplir un récipient de pesée (30) dans un dispositif de pesage selon la revendication 1 à utiliser dans des processus de soutirage et/ou de dosage dans des installations industrielles dédiées aux matières en vrac (granulés plastiques, composants de peinture, pigments), avec un récipient de pesée (30), un tube de vanne (7) destiné à amener la matière en vrac dans le récipient de pesée (30) et présentant un siège de vanne conique (24) contre l'orifice d'aboutissement inférieur, siège avec lequel interagit de façon étanchéisante un corps de fermeture (22) pilotable par moteur jusque sur la position de fermeture et la position d'ouverture (X et Y respectivement) et allant en se rétrécissant selon une géométrie conique en direction de l'orifice de remplissage, sachant que le plan de fermeture du corps de fermeture (22) se situe sur le plan de l'orifice de remplissage d'un couvercle (29) obturant le dessus du récipient de pesée (30), dessus à travers lequel le tube de vanne (7) amène la matière en vrac dans le récipient de pesée (30), sachant que le récipient de pesée (30) présente des goujons (31, 32) sur des côtés opposés, goujons par lesquels il repose respectivement dans un appui (33, 34) qui est relié via une barre (39, 40) avec une fourche de pesée configurée approximativement en U lorsque vue de dessus, fourche à laquelle est affectée une cellule de pesée (50), et en ce que chacune des barres (39, 40) est couplée avec l'une des branches en U, et que la nervure de la fourche de pesée (45) en U interagit avec la cellule de pesée (50), **caractérisé en ce que** lors de la première opération de remplissage le corps de fermeture (22) est piloté en position ouverte jusqu'à ce que le poids du récipient de pesée (30) n'augmente plus, ce à la suite de quoi la limite ou des limites de remplissage le cas échéant minorées d'une déduction empirique pour les remplissages suivants du récipient de pesée (30) sont automatiquement calculées, enregistrées dans une mémoire électronique de données et utilisées . comme grandeur de pilotage ou de régulation lors des remplissages suivants du récipient de pesée (30).

15. Procédé selon la revendication 14, **caractérisé en ce que** le corps de fermeture (22) est piloté en position ouverte jusqu'à ce que le récipient de pesage (30) se remplisse dans tous les cas de matière en vrac, et à ce que la quantité maximale possible de matière se trouve dans le récipient de pesée (30) après que le corps de fermeture (22) se soit fermé, et **en ce que** le cas échéant, après prise en compte d'une déduction empirique, la valeur résultante est automatiquement calculée et entrée dans la mémoire électronique d'un ordinateur, valeur que la technique de pilotage et de régulation prend en compte lors des remplissages suivants du récipient de pesée (30).

16. Procédé selon la revendication 14, **caractérisé en ce qu'**à partir de la quantité du premier remplissage et du volume connu du récipient de pesée est automatiquement calculé le poids en vrac de la matière, et **en ce qu'**il est saisi dans la commande et la régulation afin de réguler ou piloter d'autres fonctions.

17. Procédé selon la revendication 14, **caractérisé en ce qu'**après le premier remplissage du récipient de pesée (30) est mesuré le temps exact, c'est-à-dire le temps nécessaire pour remplir une certaine quantité de matière (c'est-à-dire son aptitude à l'écoulement) et **en ce que** ce temps est utilisé avec le poids en vrac comme valeur de pilotage et de régulation dans un ordinateur pour déterminer le débit de dosage que présente la vis sans fin de dosage concernée, de sorte que la valeur déterminée serve à piloter ou réguler le couple absorbé par le moteur entraînant la vis de dosage sans fin concernée, ou la vitesse dudit moteur.
